# EUROPEAN PATENT APPLICATION

(11) **EP 4 124 101 A1**
(43) Date of publication of application: **25.01.2023**
(21) Application number: 20925901.9
(22) Date of filing: 19.03.2020
(51) Int. Cl.: H04W 24/10

(54) **TERMINAL, WIRELESS COMMUNICATION METHOD AND BASE STATION**

(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); ZHANG, Xiaohong, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2020/012421
(87) International publication number: WO 2021/186701

(57) **Abstract**

A terminal according to an aspect of the present disclosure includes a reception section configured to receive downlink control information requesting transmission of channel state information using an uplink control channel, and a control section configured to perform control to transmit at least one of the channel state information and another UL transmission based on a first priority corresponding to the channel state information and a second priority corresponding to the another UL transmission when transmission of the uplink control channel used for transmission of the channel state information overlaps with the another UL transmission.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project(3GPP) Release(Rel.)8 and 9).

Successor systems to LTE (for example, also referred to as 5th generation mobile communication system (5G), 5G+(plus), New Radio (NR), or 3GPP Rel. 15 or later) are also being studied.

In addition, the existing system (for example, before Rel. 15) supports a configuration in which retransmission of the PDSCH is controlled by the UE feeding back the delivery acknowledgement signal (HARQ-ACK, ACK/NACK, or A/N) to the DL data (for example, PDSCH).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

Future radio communication systems (such as 5G or NR) are expected to involve a plurality of traffic types (also referred to as services, types, service types, communication types, or use cases) having different requirements such as higher speed and larger capacity (for example, enhanced mobile broad band (eMBB)), a massive amount of terminals (for example, massive machine type communication (mMTC), internet of things (IoT)), and ultrahigh reliability and low latency (for example, ultra reliable and low latency communications (URLLC)).

In the NR after Rel. 16, it is considered that a priority is configured for a given signal or channel according to a given traffic type or required condition, and the transmission processing or the reception processing (for example, processing at the time of collision of a plurality of signals, and the like) is controlled on the basis of the priority.

In addition, in the existing system, reporting of aperiodic channel state information (for example, A-CSI) is controlled using an uplink shared channel (for example, PUSCH). Meanwhile, in Rel. 16 and later, it is assumed that A-CSI report using an uplink control channel (for example, PUCCH) is also supported.

However, how to control the configuration of the priority for a given signal or channel, or how to control the transmission processing or the reception processing in a case where signals having different priorities collide or the like has not been sufficiently studied.

Therefore, an object of the present disclosure is to provide a terminal, a radio communication method, and a base station capable of appropriately performing communication even in a case of performing communication using a plurality of traffic types.

### Solution to Problem

According to an aspect of the present disclosure, there is provided a terminal including: a reception section configured to receive downlink control information requesting transmission of channel state information using an uplink control channel; and a control section configured to perform control to transmit at least one of the channel state information and another UL transmission based on a first priority corresponding to the channel state information and a second priority corresponding to the another UL transmission when transmission of the uplink control channel used for transmission of the channel state information overlaps with the another UL transmission. Advantageous Effects of Invention

According to one aspect of the present disclosure, communication can be appropriately performed even when communication is performed using a plurality of traffic types.

### Brief Description of Drawings

Fig. 1 is a diagram illustrating an example of a case where an A-CSI report using a PUCCH collides with another UL transmission.
Fig. 2 is a diagram illustrating an example of an information element of a CSI aperiodic trigger state list.
Fig. 3 is a diagram illustrating an example of configuration of a priority of the A-CSI report using the PUCCH.
Fig. 4 is a diagram illustrating an example of an information element of CSI report configuration.
Figs. 5A and 5B are diagrams illustrating another example of the configuration of the priority of the A-CSI report using the PUCCH.
Figs. 6A and 6B are diagrams illustrating an example of transmission control in a case where the A-CSI report using the PUCCH collides with another UL transmission.
Fig. 7 is a diagram illustrating another example of transmission control in a case where the A-CSI report using the PUCCH collides with another UL transmission.
Figs. 8A and 8B are diagrams illustrating another example of transmission control in a case where the A-CSI report using the PUCCH collides with another UL transmission.
Figs. 9A and 9B are diagrams illustrating another example of transmission control in a case where the A-CSI report using the PUCCH collides with another UL transmission.
Fig. 10 is a diagram illustrating an example of a schematic configuration of a radio communication system according to one embodiment.
Fig. 11 is a diagram illustrating an example of a configuration of a base station according to one embodiment.
Fig. 12 is a diagram illustrating an example of a configuration of a user terminal according to one embodiment.
Fig. 13 is a diagram illustrating an example of a hardware configuration of the base station and the user terminal according to one embodiment.

### Description of Embodiments

### <Service (Traffic Type)>

Future radio communication systems (for example, NR) are expected to involve traffic types (also referred to as types, services, service types, communication types, or use cases) such as an enhanced mobile broadband (eMBB), machine type communications that embody multiple simultaneous connection (for example, massive machine type communications (mMTC), Internet of Things (IoT), and ultra-reliable and low-latency communications (URLLC). For example, it is required that URLLC have smaller latency and higher reliability than eMBB.

The traffic type may be identified in a physical layer on the basis of at least one of the following.
- Logical channels with different priorities
- Modulation and coding scheme (MCS) table (MCS index table)
- Channel quality indication (CQI) table
- DCI format
- System information-radio network temporary identifier (RNTI) used for scrambling (masking) of cyclic redundancy check (CRC) bit included in (added to) the DCI (DCI format)
- Radio resource control (RRC) parameter
- Specific RNTI (for example, RNTI for URLLC, MCS-C-RNTI, or the like)
- Search Space
- Given field in DCI (for example, newly added field or reuse of existing field)

Specifically, a traffic type of HARQ-ACK for a PDSCH (or PUCCH) may be determined on the basis of at least one of the followings.
- MCS index table used to determine at least one of the modulation order, target code rate, and transport block size (TBS) of the PDSCH (for example, whether to use MCS index table 3)
- RNTI used for CRC scrambling of DCI used for scheduling the PDSCH (for example, whether CRC scrambled with C-RNTI or MCS-C-RNTI)
- Priority that is configured by higher layer signaling

The traffic type may be associated with communication requirements (requirements and required conditions such as latency and error rate), a data type (voice, data, and the like), or the like.

A difference between URLLC requirements and eMBB requirements may be that URLLC is lower in latency than eMBB or that URLLC requirements include reliability requirements.

For example, eMBB user (U)-plane latency requirements may include that downlink U-plane latency is 4 ms and that uplink U-plane latency is 4 ms. Meanwhile, URLLC U-plane latency requirements may include that downlink U-plane latency is 0.5 ms and that uplink U-plane latency is 0.5 ms. Furthermore, the URLLC reliability requirements may include that a 32-byte error rate is 10⁻⁵ for a U-plane latency of 1 ms.

In contrast, enhancement of the reliability of traffic for unicast data is mainly studied as enhanced ultra reliable and low latency communications (eURLLC). Hereinafter, in a case where URLLC and eURLLC are not distinguished, they are simply referred to as URLLC.

### (CSI Report or Reporting)

In Rel. 15 NR, a terminal (also referred to as a user terminal, user equipment (UE), or the like) generates (also referred to as determine, calculate, estimate, measure, or the like) channel state information (CSI) based on a reference signal (RS) (or a resource for the RS), and transmits (also referred to as report, feedback, or the like) the generated CSI to a network (for example, a base station). The CSI may be transmitted to the base station by using an uplink control channel (for example, a physical uplink control channel (PUCCH)) or an uplink shared channel (for example, a physical uplink shared channel (PUSCH)), for example.

The RS used for generating the CSI may be at least one of a channel state information reference signal (CSI-RS), a synchronization signal/physical broadcast channel (SS/PBCH) block, a synchronization signal (SS), or a demodulation reference signal (DMRS), for example.

The CSI-RS may include at least one of non-zero power (NZP) CSI-RS and CSI-interference management (CSI-IM). The SS/PBCH block may be a block including an SS and a PBCH (and a corresponding DMRS), and may be referred to as an SS block (SSB) or the like. The SS may include at least one of a primary synchronization signal (PSS) and a secondary synchronization signal (SSS).

The CSI may include at least one of parameters (CSI parameters) including a channel quality indicator (CQI), a precoding matrix indicator (PMI), a CSI-RS resource indicator (CRI), an SS/PBCH block resource indicator (SS/PBCH block indicator (SSBRI)), a layer indicator (LI), a rank indicator (RI), layer 1 reference signal received power (L1-RSRP), L1-reference signal received quality (RSRQ), an L1-signal-to-noise and interference ratio (or signal to interference plus noise ratio) (SINR), an L1-signal to noise ratio (SNR), or the like.

As CSI reporting methods, (1) periodic CSI (P-CSI) reporting, (2) aperiodic CSI (A-CSI) reporting, (3) semi-persistent (semi-permanent) CSI (SP-CSI) reporting, and the like are under study.

The UE may receive information (report configuration information) about CSI reporting and control the CSI reporting on the basis of the report configuration information. The report configuration information may be, for example, "CSI-ReportConfig" as an information element (IE) of radio resource control (RRC). Note that, in the present disclosure, the RRC IE may be rephrased as an RRC parameter, a higher layer parameter, or the like.

The report configuration information (for example, "CSI-ReportConfig" as the RRC IE) may include, for example, at least one of the following.
- Information about the type of the CSI reporting (report type information, for example, "reportConfigType" as the RRC IE)
- Information about one or more quantities of CSI (one or more CSI parameters) to be reported (report quantity information, for example, "reportQuantity" as the RRC IE)
- Information about an RS resource used to generate the quantity (the CSI parameter) (resource information, for example, "CSI-ResourceConfigId" as the RRC IE)
- Information about a frequency domain to be subjected to the CSI reporting (frequency domain information, for example, "reportFreqConfiguration" as the RRC IE)

For example, the report type information may indicate periodic CSI (P-CSI) reporting, aperiodic CSI (A-CSI) reporting, or semi-permanent (semi-persistent) CSI (SP-CSI) reporting.

In addition, the report quantity information may designate at least one combination of the CSI parameters (for example, CRI, RI, PMI, CQI, LI, L1-RSRP, and the like).

Further, the resource information may be an ID of the RS resource. The RS resource may include, for example, a non-zero power CSI-RS resource or SSB, and a CSI-IM resource (for example, a zero power CSI-RS resource).

In addition, the frequency domain information may indicate frequency granularity of the CSI reporting. The frequency granularity may include, for example, a wideband and a subband.

The UE performs channel estimation by using the received RS, and estimates a channel matrix H. The UE feeds back an index (PMI) that is determined on the basis of the estimated channel matrix.

The PMI may indicate a precoder matrix (also simply referred to as a precoder) that is considered by the UE as being appropriate for downlink (DL) transmission to the UE. Each value of the PMI may correspond to one precoder matrix. A set of values of the PMI may correspond to a set of different precoder matrices that is called a precoder codebook (also simply referred to as a codebook).

In addition, CSI feedback for the above-described traffic type (for example, URLLC, IoT, and the like) has been studied. In particular, extension of CSI feedback (reporting) for more accurate selection of a modulation and coding scheme (MCS) has been considered in order to satisfy URLLC requirements.

For example, A-CSI (A-CSI on PUCCH) using PUCCH has been studied. The A-CSI in the existing system is carried only on the PUSCH scheduled by a UL grant.

Assuming a scenario with many DLs, the A-CSI using the PUSCH cannot be triggered frequently because many DL transmission resources are required. When the CSI feedback cannot be obtained, the base station needs to schedule DL URLLC transmission using the most conservative resource allocation and MCS level. As a result, resource utilization efficiency may decrease.

Therefore, in addition to the A-CSI (for example, A-CSI on PUSCH) using the PUSCH, the A-CSI (for example, A-CSI on PUCCH) using the PUCCH is preferably supported.

### <Priority Configuration>

In the NR after Rel. 16, configuring priorities at a plurality of levels (for example, two levels) for a given signal or channel is being studied. For example, it is assumed that communication is controlled (for example, transmission control at the time of collision, and the like) by configuring different priorities for every signal or channel each corresponding to different traffic types (also referred to as services, service types, communication types, use cases, and the like). This makes it possible to control communication by configuring, for the same signal or channel, different priorities depending on a service type or the like.

The priority may be configured for a signal (for example, UCI such as HARQ-ACK and CSI, a reference signal, and the like), a channel (PDSCH, PDCCH, PUSCH, PUCCH, and the like), a HARQ-ACK codebook, or the like. The priority may be defined by a first priority (for example, High) and a second priority (for example, Low) that is lower than the first priority. Alternatively, three or more types of priorities may be configured. Notification of the information about the priority may be provided from a base station to the UE by using at least one of higher layer signaling and DCI.

For example, priorities may be configured for HARQ-ACK for PDSCH that is dynamically scheduled, HARQ-ACK for semi-persistent PDSCH (SPS PDSCH), and HARQ-ACK for SPS PDSCH release. Alternatively, priorities may be configured for HARQ-ACK codebooks corresponding to these HARQ-ACKs. Note that, in a case where a priority is configured to the PDSCH, the priority of the PDSCH may be read as interchangeable with the priority of HARQ-ACK for the PDSCH.

The UE may control UL transmission on the basis of the priorities in a case where different UL signals or UL channels collide with each other. For example, control may be performed so that UL transmission with high priority is performed and that UL transmission with low priority is not performed (for example, to drop).

The different UL signals/UL channels colliding with each other may be a case where resources respectively corresponding to the different UL signals/UL channels overlap, or a case where transmission timings of the different UL signals/UL channels overlap. The resource may be, for example, a time resource (for example, OFDM symbols), or a time resource and a frequency resource. The collision may be read as interchangeable with overlap or overlapping. The collision of different UL signals/UL channels may be limited to when the different UL signals/UL channels are transmitted on the same carrier.

In a case where notification of the priorities is provided using the DCI, whether or not a bit field (for example, priority indicator) for providing notification of the priority to the DCI is configured may be provided in notification or configured from a base station to the UE using higher layer signaling. In addition, in a case where no bit field for providing notification of the priority to the DCI is included, the UE may determine that the priority of the PDSCH (or HARQ-ACK corresponding to the PDSCH) scheduled by the DCI is a specific priority (for example, low) .

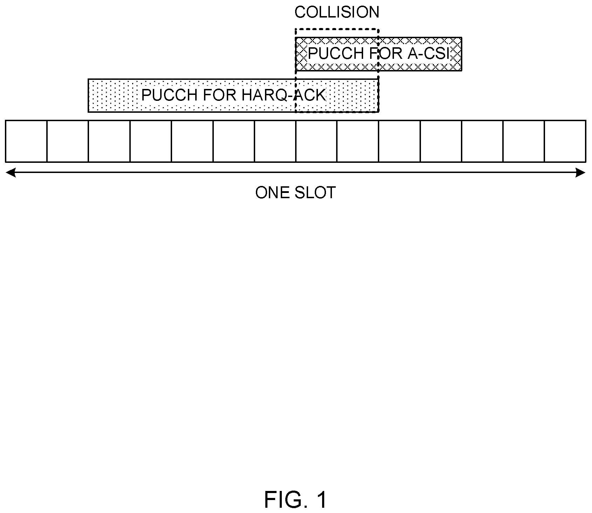

As described above, when the UL transmission is controlled on the basis of the priority, how to control the configuration of the priority of the A-CSI report using the newly supported PUCCH becomes a problem. In addition, how to control the UL transmission when the A-CSI report using the PUCCH collides with another UL transmission becomes a problem (refer to Fig. 1).

Fig. 1 illustrates an example of a case where a PUCCH for HARQ-ACK transmission and a PUCCH for A-CSI report collide with each other. In such a case, how to control each PUCCH transmission becomes a problem.

The present inventors have focused on a case where an A-CSI report using a newly supported PUCCH collides with another UL transmission, studied how to control the UL transmission in such a case, and conceived the present embodiment.

Hereinafter, embodiments according to the present disclosure will be described in detail with reference to the drawings. The following aspects may be applied independently or may be applied in combination. In the present disclosure, A/B may be read as interchangeable with at least one of A and B, and A/B/C may be read as interchangeable with at least one of A, B, and C.

In addition, in the following description, two levels (x = 2) of the first priority (High) and the second priority (Low) will be described as an example of the priority, but the number and type of the priority are not limited thereto. Three or more types (or three or more levels) of priorities may be applied. Furthermore, a priority configured to each signal or channel may be configured in a UE by higher layer signaling or the like.

In the following description, two service types of eMBB and URLLC will be described as examples of a plurality of service types, however, the types and the number of service types are not limited thereto. In addition, a service type may be configured in association with the priority. Furthermore, in the following description, the drop may be read as interchangeable with cancellation or non-transmission.

In the present disclosure, the cell, the CC, the carrier, the BWP, and the band may be read as interchangeable with each other. In the present disclosure, an index, an ID, an indicator, and a resource ID may be read as interchangeable with each other. In the present disclosure, an RRC parameter, a higher layer parameter, an RRC information element (IE), and an RRC message may be read as interchangeable with each other.

In the following description, a case where the A-CSI report using the PUCCH collides with another UL transmission will be described as an example, but the present embodiment may be applied to a signal/channel other than the A-CSI report.

### (First Aspect)

In a first aspect, an example of the configuration of priority for A-CSI report (for example, A-CSI on PUCCH or A-CSI on PUCCH) using PUCCH will be described. In the following description, a case where the priority of the x level (where x = 2) is configured to the A-CSI (or PUCCH corresponding to A-CSI) will be described as an example.

The A-CSI report using PUCCH may be requested/triggered by a given field included in the DCI. The DCI may be a DCI format 0_1/0_2 corresponding to the UL grant and a DCI format 1_1/1_2 corresponding to the DL assignment (DL grant). The given field may be a CSI request field including up to a given bit (for example, 6 bits).

The UE may be notified of one or more pieces of configuration information about the A-CSI report using the PUCCH from the network (for example, a base station). The configuration information may be referred to as a CSI report configuration (CSI-ReportConfig), a trigger state of the A-CSI report using the PUCCH, a list of the trigger states, an A-CSI report configuration, a trigger state, a report configuration, a report configuration, or the like.

For example, a CSI request field included in the DCI may designate one trigger state from a plurality of trigger states configured by higher layer signaling (for example, RRC signaling). Note that the CSI request field may be read as interchangeable with a CSI trigger field.

The CSI-RS measured for AP-CSI reporting may be referred to as AP CSI-RS or A-CSI-RS (Aperiodic CSI-RS). In the A-CSI report, since the measurement of the A-CSI-RS and the A-CSI report are simultaneously triggered by using the DCI, the CSI reporting can be dynamically triggered while efficiently using the RS resource and the uplink channel resource.

The list of trigger states for the A-CSI report may be configured in the RRC information element "CSI-AperiodicTriggerStateList." Each trigger state may be associated with one or more report configuration IDs (CSI-ReportConfigId), CSI resource configuration information, TCI states (or QCL assumed) of A-CSI-RS, and the like.

For the A-CSI-RS resource of a CSI-RS resource set related to the trigger state, the UE may be instructed by the higher layer to configure the QCL including the RS resource and the QCL type of the QCL. For example, the TCI state (or QCL assumption) of the A-CSI-RS may be designated by (the CSI request field of) the DCI that triggers the measurement of the A-CSI-RS.

A given priority may be configured for the A-CSI report using the PUCCH. For example, the priority of the A-CSI report using the PUCCH may be configured using at least one of the following Option 1-1 to Option 1-5. The priority of the A-CSI report may be read as interchangeable with the priority of the A-CSI, the priority of the A-CSI transmission, the priority of the PUCCH corresponding to the A-CSI, the priority of the PUCCH used for the A-CSI report, or the priority of the PUCCH used for the A-CSI transmission.

The UE may determine a priority index (or, the priority level) of A-CSI report using the PUCCH based on at least one of the following Option 1-1 to Option 1-5.

### <Option 1-1>

The priority of the A-CSI report using PUCCH may always be configured or defined to the same level (or the index or value). For example, the priority of the A-CSI report using the PUCCH may be configured to one of the first priority (High) and the second priority (Low). The priority may be defined in a specification, or may be provided in notification from the base station to the UE by using at least one of higher layer signaling and DCI.

For example, the first priority (high) may be always configured as the priority of the A-CSI report using the PUCCH. When the A-CSI report collides with another UL transmission, the UE may control the transmission processing at the time of collision assuming that the priority of the A-CSI report using the PUCCH is the first priority (high).

### <Option 1-2>

The priority of the A-CSI report using the PUCCH may be provided in notification from the base station to the UE by using higher layer signaling (or RRC configuration (RRC configuration)). For example, the base station may notify the UE of RRC signaling including a parameter (for example, priority indication parameter) for providing notification of the priority of the A-CSI report using the PUCCH. A parameter (hereinafter, it is also referred to as a priority notification parameter) that provides notification of the priority of A-CSI report may be referred to as CSIReportPriority, for example.

The priority notification parameter may be configured for each given configuration parameter unit. The given configuration parameter may be a trigger state (for example, Trigger State) or a CSI report configuration (for example, CSI-ReportConfig). The trigger state may be referred to as a CSI trigger state (CSI-TriggerState), a CSI aperiodic trigger state (CSI-AperiodicTriggerState), or an aperiodic trigger state (AperiodicTriggerState).

### [Priority Configuration for Each CSI Unknown Trigger State]

When the priority notification parameter (for example, CSIReportPriority) is configured for each CSI aperiodic trigger state (for example, CSI-AperiodicTriggerState), the configuration of different priorities may be allowed for each CSI aperiodic trigger state.

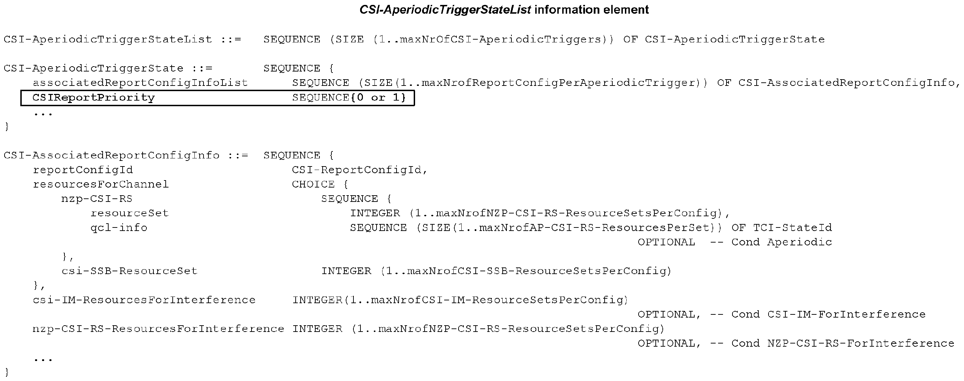

Fig. 2 is a diagram illustrating an example of an information element (CSI-AperiodicTriggerStateList information element) of the CSI aperiodic trigger state list. Here, a case where the priority notification parameter (CSIReportPriority) is configured for each CSI aperiodic trigger state is illustrated. Here, a case where two types of priorities (for example, 0 or 1) are configured by the priority notification parameter is illustrated, but the number of configured priorities is not limited thereto.

When A-CSI report (or, CSI measurement and A-CSI report) is triggered based on the CSI request field included in the DCI, each code point of the CSI request field may be associated with one trigger state.

Moreover, one CSI aperiodic trigger state may be associated with one or more CSI report configurations (CSI-ReportConfig). Notification of the association between the CSI aperiodic trigger state and the CSI report configuration may be provided from the base station to the UE by higher layer signaling.

One or more CSI report configurations (or belongs to) associated with a same CSI aperiodic trigger state may correspond to a same priority. When the plurality of CSI report configurations are associated with the same CSI aperiodic trigger state, the plurality of CSI report configurations may each correspond to different cells (or CC) .

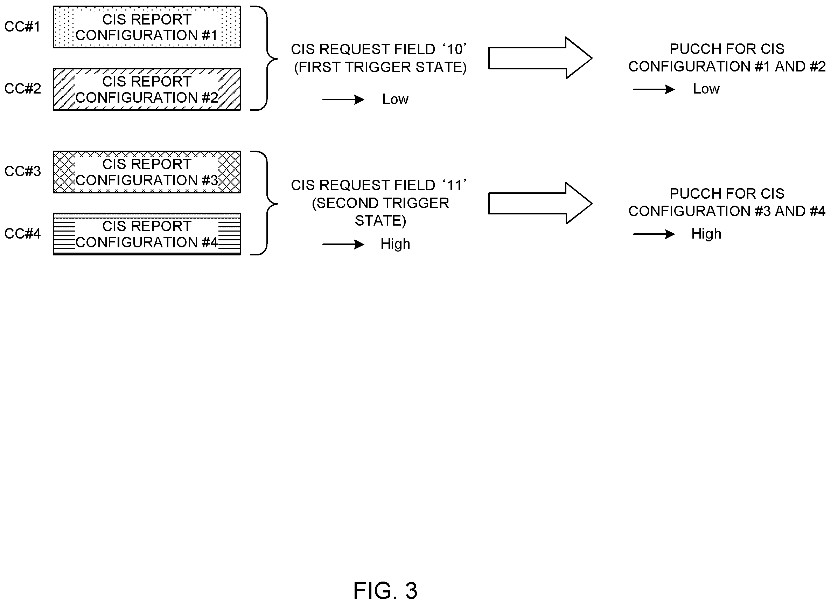

Fig. 3 is a diagram illustrating an example of the priority configured in the CSI report configuration. Here, a case where an A-CSI report related to a specific trigger state (or, CSI report configuration) is triggered by the CSI request field (for example, 2 bits) included in the DCI is illustrated.

Also, here, the CSI request field "10" corresponds to the first trigger state and the CSI request field "11" corresponds to the second trigger state. Further, the first trigger state (or, the CSI request field "10") is associated with a CSI report configuration #1 and a CSI report configuration #2, and the second trigger state (or, the CSI request field "11") is associated with a CSI report configuration #3 and a CSI report configuration #4.

The CSI report configurations #1 and #2 may correspond to different CCs. Here, a case where the CSI report configuration #1 corresponds to CC #1 and the CSI report configuration #2 corresponds to CC #2 is illustrated. Similarly, the CSI report configurations #3 and #4 may correspond to different CCs. Here, a case where the CSI report configuration #3 corresponds to CC #3 and the CSI report configuration #4 corresponds to CC #4 is illustrated.

The UE may determine the priority of the A-CSI report (or PUCCH for A-CSI report) corresponding to the CSI report configuration #1 and the CSI report configuration #2 based on the priority configured for the first trigger state. For example, it is assumed that the second priority (for example, Low) is configured to the first trigger state (or, the CSI request field "10") by the higher layer signaling. In such a case, the UE may determine that A-CSI report (or PUCCH for A-CSI report) corresponding to CSI report configuration #1 and CSI report configuration #2 is the second priority.

Similarly, the UE may determine the priority of the A-CSI report (or PUCCH for A-CSI report) corresponding to CSI report configuration #3 and CSI report configuration #4 based on the priority configured for the second trigger state. For example, it is assumed that the first priority (for example, High) is configured to the second trigger state (or, the CSI request field "11") by the higher layer signaling. In such a case, the UE may determine that the A-CSI report (or PUCCH for A-CSI report) corresponding to the CSI report configuration #3 and the CSI report configuration #4 is the first priority.

By changing the priority for each trigger state of the CSI report, the priority of the A-CSI can be flexibly configured.

### [Priority Configuration for Each CSI Report Configuration]

When the priority notification parameter (for example, CSIReportPriority) is configured for each CSI report configuration (for example, CSI report config), the configuration of different priorities may be allowed for each CSI report configuration.

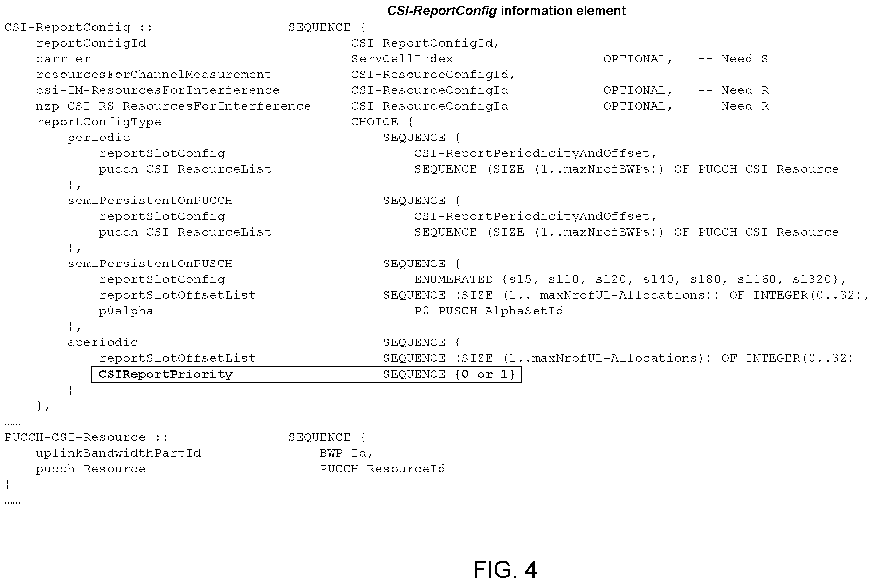

Fig. 4 is a diagram illustrating an example of an information element (CSI-ReportConfig information element) of the CSI report configuration. Here, a case where the priority notification parameter (CSIReportPriority) is configured for each CSI report configuration is illustrated. Here, a case where two types of priorities (for example, 0 or 1) are configured by the priority notification parameter is illustrated, but the number of configured priorities is not limited thereto. Further, as the report configuration type, the priority notification parameter may be configured for aperiodic.

Each CSI report configuration may be associated with a given trigger state (for example, the CSI aperiodic trigger state). Notification of the association between the CSI aperiodic trigger state and the CSI report configuration may be provided from the base station to the UE by higher layer signaling.

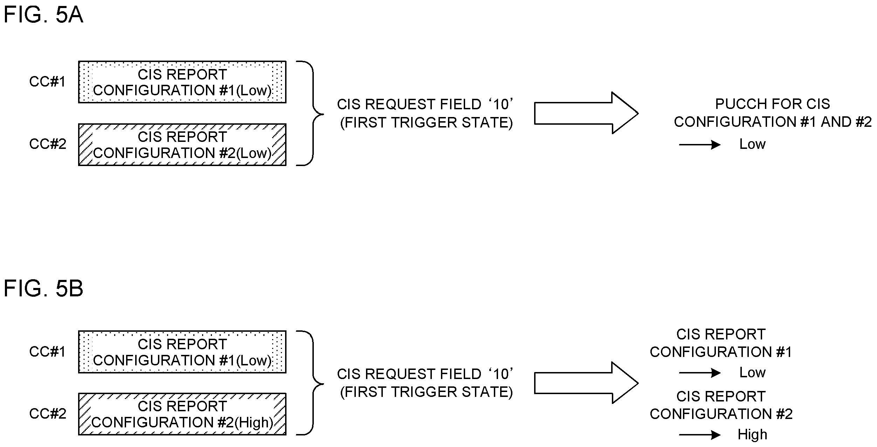

Figs. 5A and 5B are diagrams illustrating an example of the priority configured in the CSI report configuration. Here, a case where an A-CSI report related to a specific trigger state (or, CSI report configuration) is triggered by the CSI request field (for example, 2 bits) included in the DCI is illustrated.

In addition, here, a case is illustrated in which the CSI request field "10" corresponds to the first trigger state, and the first trigger state (or, the CSI request field "10") is associated with the CSI report configuration #1 and the CSI report configuration #2.

The UE may determine the priority of the A-CSI report (or PUCCH for A-CSI report) corresponding to the CSI report configuration #1 and the CSI report configuration #2 based on the priority configured for each the CSI report configuration. For example, it is assumed that the second priority (for example, Low) is configured to the CSI report configuration #1 and the CSI report configuration #2 by the higher layer signaling (refer to Fig. 5A). In such a case, the UE may determine that A-CSI report (or PUCCH for A-CSI report) corresponding to CSI report configuration #1 and CSI report configuration #2 is the second priority.

As illustrated in FIG 5A, the CSI report configurations associated with the same trigger state may be configured with the same priority. Alternatively, different priorities may be configured for the CSI report configuration associated with the same trigger state (refer to Fig. 5B).

By changing the priority for each CSI report configuration, the priority of the A-CSI can be configured more flexibly.

### <Option 1-3>

When the A-CSI report using the PUCCH is triggered by the DCI for not scheduling data, notification of the priority (or PUCCH) of the A-CSI report may be provided from the base station to the UE by using the DCI.

The DCI may be DL assignment (for example, DCI format 1_1 or 1_2) or UL grant (for example, DCI format 0_1 or 0_2).

The data may be DL data or UL data. The DL data may be at least one of a DL-SCH, a DL transport block, and a PDSCH. The UL data may be at least one of the UL-SCH, the UL transport block, and the PUSCH.

The base station may notify the UE of the information about the priority by using a given field included in the DCI. The given field may be a priority notification field (for example, PriorityIndicator field) included in the existing DCI format (for example, DCI format 1_1, 1_2, 0_1, or 0_2). Alternatively, the given field may be a newly configured field (new field).

Alternatively, the UE may be notified of the priority of the A-CSI report using the PUCCH by using a given field included in the group DCI. The group DCI may be DCI transmitted (for example, multicast transmission) to a plurality of UEs. In this case, notification of the priority of the A-CSI report using the PUCCH can be provided to a plurality of UEs included in a given group by using the group DCI.

Alternatively, the UE may be notified of the priority of the A-CSI report using the PUCCH by using another field (for example, an existing field) included in the DCI. The another field may be, for example, at least one of a HARQ-ACK process number, a new data indicator (NDI), an RV, and an MCS. The UE may determine other fields used for the notification of the priority of the A-CSI report based on a notification (for example, higher layer signaling) from the base station or a given rule.

### <Option 1-4>

When the A-CSI report using the PUCCH is triggered by the DCI for scheduling data, notification of the priority (or PUCCH) of the A-CSI report may be provided from the base station to the UE by using the DCI.

The DCI may be DL assignment (for example, DCI format 1_1 or 1_2) or UL grant (for example, DCI format 0_1 or 0_2).

The data may be DL data or UL data. The DL data may be at least one of a DL-SCH, a DL transport block, and a PDSCH. The UL data may be at least one of the UL-SCH, the UL transport block, and the PUSCH.

When notification of the priority of the A-CSI report is provided by the priority notification field (for example, PriorityIndicator field) included in the DCI that triggers the A-CSI report using the PUCCH, the priority of the A-CSI report may be configured similarly to the priority of another signal/channel. That is, the UE may be notified of the priority of the A-CSI report using a field used for notification of the priority of another signal/channel.

For example, it is assumed that the A-CSI report using the PUCCH is triggered by the DCI of the DL assignment (for example, DCI format 1_1 or 1_2). In such a case, the UE may determine the priority of the HARQ-ACK for the DL data and the priority of the A-CSI report on the basis of the priority notification field included in the DCI. That is, the priority of the HARQ-ACK for the DL data and the priority of the A-CSI report may be configured to be the same.

It is assumed that the A-CSI report using the PUCCH is triggered by the DCI of the UL grant (for example, DCI format 0_1 or 0_2). In such a case, the UE may determine the priority of the PUSCH and the priority of the A-CSI report on the basis of the priority notification field included in the DCI. That is, the priority of the PUSCH and the priority of the A-CSI report may be configured to be the same.

In this way, by providing notification of the priorities of a plurality of signals/channels using one field (or, common fields) included in the DCI, it is possible to suppress an increase in the overhead of the DCI.

Alternatively, the priority notification field included in the DCI that triggers the A-CSI report using the PUCCH may not be used (for example, another field may be used), and the priority of the A-CSI report may be notified.

In this case, a field (or bit value) used for the notification of the priority of the A-CSI report and a field (or bit value) used for the request of the A-CSI report may be subjected to joint coding. Information (for example, an association between the bit value and the CSI report configuration) about the field used for the request of the A-CSI report may be provided in notification or configured to the UE by the higher layer signaling.

For example, one bit used for priority notification of the A-CSI report and five bits or less used for request/trigger of the A-CSI report may be jointly coded.

Alternatively, given bits (for example, x bits) may be applied to the A-CSI report priority and the A-CSI report request/trigger. For example, when x is 2 bits, "01" may designate a trigger + low priority of CSI reporting process #1, and "10" may designate a trigger + high priority of CSI reporting process #2. x may be predefined in use, or may be provided in notification from the base station to the UE by the higher layer signaling or the like.

In this manner, the priority of the A-CSI report can be flexibly configured by providing notification of the priority of the A-CSI report using another field of the DCI.

### [Option 1-5]

When the DCI that triggers the A-CSI report using the PUCCH is triggered, the UE may determine the priority (or PUCCH) of the A-CSI report based on given information/parameters (implicit indication). The given information/parameter may be a format (or type) of the DCI. Alternatively, the given information/parameter may be CORESET or search space configured by DCI, or may be RNTI corresponding to DCI.

For example, it is assumed that use of different DCI formats is supported for triggering A-CSI using the PUCCH. In a case where the A-CSI report is triggered by the non-fallback (for example, a DCI format other than the DCI format 0_0 or 1_0) DCI, the priority of the A-CSI report may be the first priority (for example, high), and in other cases, the priority may be the second priority (for example, low) .

Alternatively, a different CORESET index, a different search space index, or a different RNTI may be configured for each priority (for example, low and high). The UE may determine the priority of A-CSI report based on at least one of a CORESET, a search space, and an RNTI corresponding to DCI that triggers A-CSI report using a

### PUCCH.

### (Second Aspect)

In a second aspect, an example of UE operation in a case where the A-CSI report using the PUCCH and another UL transmission collide will be described. Another UL transmissions may be, for example, transmissions of another UL signal/channel to UCI/Ul data.

When the A-CSI report using the PUCCH is triggered and the A-CSI report collides with another UL transmission, the UE may control the UL transmission based on at least one of the priority and the given condition configured for each transmission. For example, when the UL transmission (first UL transmission) of the A-CSI report using the PUCCH collides with another UL transmission (second UL transmission), the UE may control the UL transmission by using at least one of the following option 2-1 to option 2-4. Note that the priority of the A-CSI report (or PUCCH for A-CSI report) using the PUCCH may be configured by the method described in the first aspect.

### <Option 2-1>

It is assumed that the UL transmission (first UL transmission) of the A-CSI report using the PUCCH collides with another UL transmission (second UL transmission), and the priority of the first UL transmission and the priority of the second UL transmission are different. In such a case, the UE may perform control such that the UL transmission with high priority is performed and the UL transmission with low priority is not performed (for example, drop).

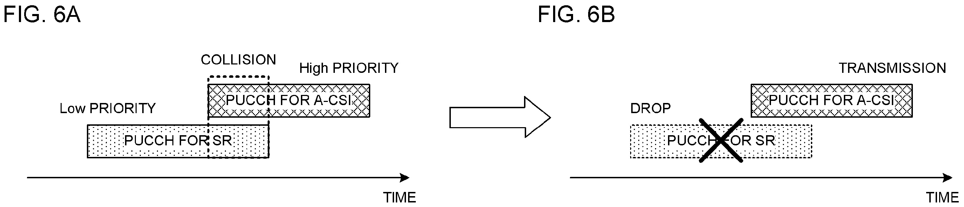

Fig. 6A illustrates a case where the PUCCH (first UL transmission) for the A-CSI report collides with the PUCCH (second UL transmission) for another UCI transmission. Here, a case where the second UL transmission is the PUCCH for the scheduling request (SR) and the priority of the first UL transmission is configured higher than the priority of the second UL transmission is illustrated.

For example, two services (for example, eMBB and URLLC) may be configured for the UE, with the first UL transmission corresponding to the URLLC and the second UL transmission corresponding to the eMBB. In such a case, the UE may control to drop the second UL transmission (PUCCH for SR) and preferentially transmit the PUCCH for the A-CSI (refer to Fig. 6B).

### <Option 2-2>

It is assumed that the same priority is configured to the UL transmission (first UL transmission) of the A-CSI report using the PUCCH and another UL transmission (second UL transmission). In such a case, the UE may control the UL transmission based on at least one of the following Option 2-2-1 to Option 2-2-4.

In Option 2-2-1, control may be performed such that the first UL transmission and the second UL transmission configured with the same priority do not collide. In Option 2-2-2, the UL transmission control may be performed based on given conditions. In Option 2-2-3, the first UL transmission and the second UL transmission may be multiplexed (or mapping) on the same Ul channel. In Option 2-2-4, simultaneous transmission (for example, simultaneous Tx) of the first UL transmission and the second UL transmission may be allowed or supported.

### [Option 2-2-1]

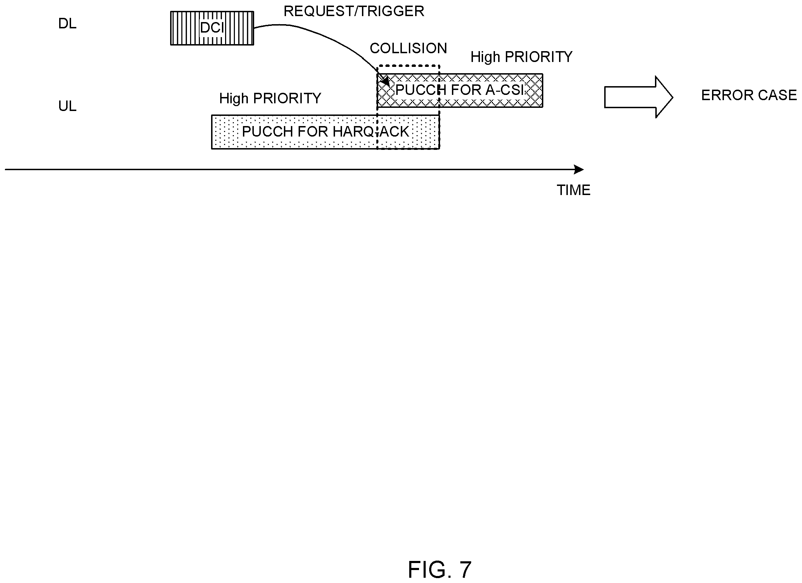

It may be assumed that the UE is scheduled such that the first UL transmission (PUCCH for A-CSI report) and the second UL transmission with the same priority are not collided. That is, the UE may assume that the PUCCH for A-CSI report triggered in the DCI does not overlap with another UL transmissions (for example, a second UL transmission) in the time domain (refer to Fig. 7).

Fig. 7 illustrates a case where the PUCCH for A-CSI triggered by the DCI collides with the PUCCH for another UCI (here, the HARQ-ACK) transmission, and the priority configured to each PUCCH is the same (here, high). As illustrated in Fig. 7, the UE does not assume that the first UL transmission and the second UL transmission in which the same priority is configured collide with each other, and may determine that the first UL transmission and the second UL transmission collide with each other as an error case.

When the UE determines that there is an error case, the UE may control not to transmit any UL transmission. The method of controlling the UL transmission in the error case may be defined in the specification, or may be determined autonomously by the UE.

### [Option 2-2-2]

In a case where the UL transmission (first UL transmission) of the A-CSI report using the PUCCH and another UL transmission (second UL transmission) collide with each other and priorities of the first UL transmission and the second UL transmission are the same, the UE may perform control such that one UL transmission is performed based on a given condition and another UL transmission is not performed (for example, drop).

The given condition may be, for example, the order in the time direction of the DCI corresponding to each UL transmission, the transmission order of the PUCCH, or another UL transmission condition/type.

The UE may perform control to preferentially transmit the UL transmission corresponding to the DCI to be transmitted later among the DCI corresponding to the UL transmission (first UL transmission) of the A-CSI report using the PUCCH and the DCI corresponding to another UL transmission (second UL transmission). For example, when the first PUCCH for HARQ-ACK transmission whose transmission is indicated by the first DCI for scheduling the PDSCH and the second PUCCH whose transmission is indicated by the second DCI for triggering the A-CSI collide with each other, and priorities of the first PUCCH (or HARQ-ACK) and the second PUCCH (for example, A-CSI report) are the same, transmission may be controlled based on a reception order of the DCI.

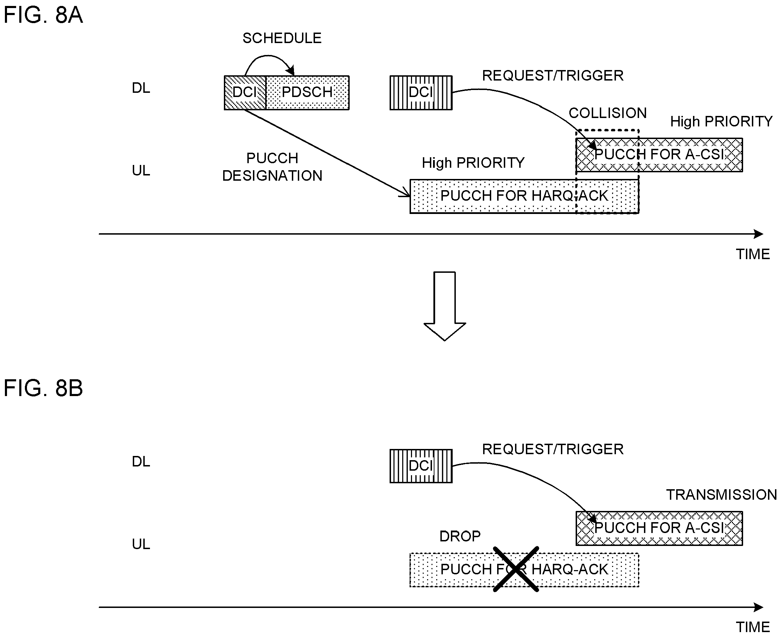

For example, the UE may control to preferentially transmit the UL transmission corresponding to the later received DCI (for example, later DCI) (refer to Figs. 8A and 8B). Fig. 8A illustrates a case where second DCI #2 is received after first DCI #1 is received. In such a case, the UE may perform control such that the second PUCCH (or A-CSI) is transmitted and the first PUCCH (or HARQ-ACK) is not transmitted (for example, drop).

In Figs. 8A and 8B, the UL transmission corresponding to the DCI is controlled based on the reception order of the DCI. However, the UL transmission may be controlled based on the transmission order of the UL transmission instead of the reception order of the DCI.

Alternatively, the UE may control the transmission based on the type of another UL transmission when the A-CSI report and another UL transmission using the PUCCH collide each other and the A-CSI report and another UL transmission have the same priority. Another UL transmission types may be classified into UL transmission types based on DCI and UL transmission types not based on DCI. The priority of the UL transmission type not based on the DCI may be configured lower than the A-CSI report.

The UL transmission that is not based on the DCI may be, for example, a configuration grant-based PUSCH transmission that is not scheduled in the DCI. For example, when the PUSCH of another UL transmission is the configuration grant-based PUSCH transmission, the A-CSI report (or PUCCH) may be preferentially transmitted, and the configuration grant-based PUSCH may not be transmitted. When the dynamic-based PUSCH scheduled by the DCI collides with the PUCCH for A-CSI report, transmission may be controlled based on the reception order of the DCI described above.

Alternatively, the UL transmission preferentially transmitted in the event of collision may be determined based on a predefined priority according to the signal type/channel type. For example, the priority order may be defined as follows.

Priority order: HARQ-ACK/UL data > A-CSI > SR/SP-CSI/P-CSI

For example, when the PUCCH for A-CSI report and the PUCCH for HARQ-ACK collide with each other, the UE may perform control such that the PUCCH for HARQ-ACK is preferentially transmitted and the PUCCH for A-CSI is not transmitted (for example, drop). Note that the priority order is not limited thereto. The priority may be defined in advance in the specification, or may be provided in notification from the base station to the UE by using the higher layer signaling or the like.

### <Option 2-2-3>

When the UL transmission (first UL transmission) of the A-CSI report using the PUCCH and another UL transmission (second UL transmission) collide, and the priorities of the first UL transmission and the second UL transmission are the same, the UE may control to transmit both the first UL transmission and the second UL transmission using the same channel. For example, the first UL transmission (for example, A-CSI) and the second UL transmission (for example, HARQ-ACK/SR/Data) may be multiplexed into the same UL channel. Here, multiplexing may be replaced with mapping.

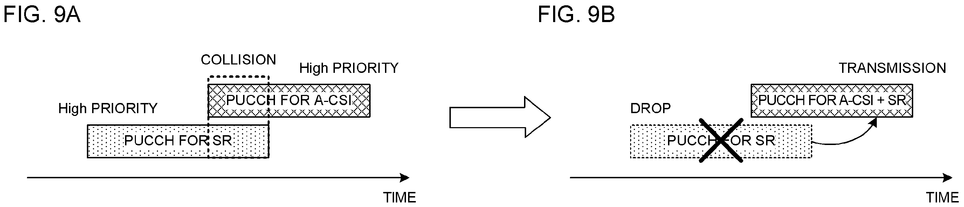

For example, when the first PUCCH for A-CSI report and the second PUCCH for SR collide with each other, the UE may multiplex A-CSI and SR into at least one (for example, the first PUCCH) of the first PUCCH and the second PUCCH (refer to Figs. 9A and 9B). The PUCCH resource may be determined based on a summed bit of the A-CSI and the SR. Alternatively, a PUCCH resource configured later in a time domain may be applied.

Further, when the first PUCCH for A-CSI report and the second PUCCH for HARQ-ACK collide with each other, the UE may multiplex the A-CSI and the HARQ-ACK to at least one (for example, the second PUCCH) of the first PUCCH and the second PUCCH. The PUCCH resource may be determined based on a summed bit of the A-CSI and the HARQ-ACK. Alternatively, a PUCCH resource configured later in a time domain may be applied.

When the first PUCCH for A-CSI report and the PUSCH for UL data collide with each other, the UE may multiplex the A-CSI and the UL data into the PUSCH. In this case, the UE may perform control to map the A-CSI and the UL data to the PUSCH by applying rate matching.

Whether or not to perform both UL transmissions using the same channel may be determined based on a total bit (total size) of both UL transmissions. Two UL transmissions may be performed using the same channel when the total size is equal to or less than a given value.

As a result, even when the A-CSI report using the PUCCH collides with another UL transmission, both the A-CSI report and another UL transmission can be transmitted.

### [Option 2-2-4]

When the UL transmission (first UL transmission) of the A-CSI report using the PUCCH and another UL transmission (second UL transmission) collide with each other, and the priorities of the first UL transmission and the second UL transmission are the same, the UE may control to transmit both the first UL transmission and the second UL transmission using different channels. For example, in a given cell (or CC), simultaneous transmission of the PUCCH used for the first UL transmission (for example, A-CSI) and the PUSCH used for the second UL transmission may be permitted.

When the PUCCH for A-CSI report and the PUSCH for UL data collide with each other, the UE may transmit the A-CSI on the PUCCH and transmit the UL data on the PUSCH.

### (Radio Communication System)

Hereinafter, a configuration of a radio communication system according to one embodiment of the present disclosure will be described. In this radio communication system, communication is performed using one or a combination of the radio communication methods according to the herein-contained embodiments of the present disclosure.

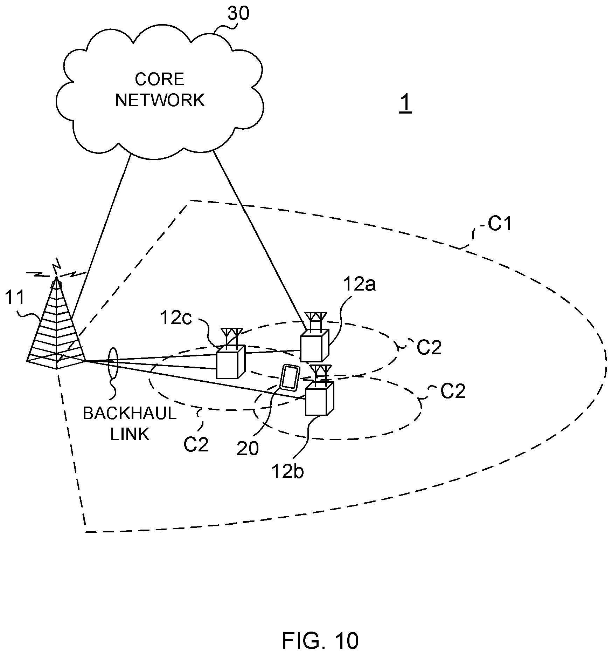

Fig. 10 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) and a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) and frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space on the basis of search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

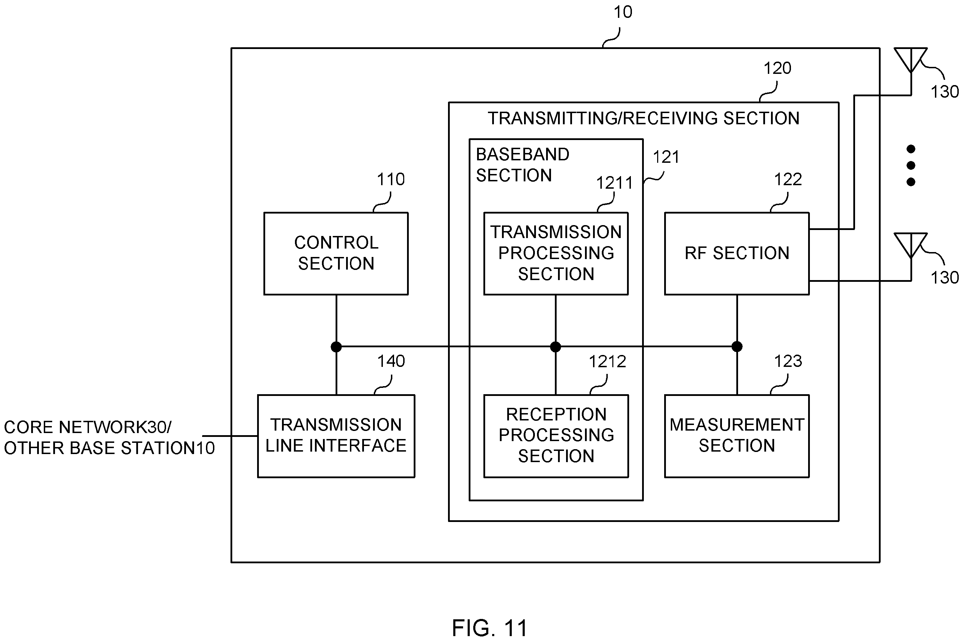

Fig. 11 is a diagram illustrating an example of a configuration of the base station according to one embodiment. The base station 10 includes a control section 110, a transmission/reception section 120, a transmission/reception antenna 130, and a transmission line interface 140. Note that one or more control sections 110, one or more transmitting/receiving sections 120, one or more transmitting/receiving antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described on the basis of common recognition in the technical field related to the present disclosure.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may forward the data, the control information, the sequence, and the like to the transmission/reception section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 120 may be configured as an integrated transmitting/receiving section, or may include a transmitting section and a receiving section. The transmission section may include the transmission processing section 1211 and the RF section 122. The receiving section may include the reception processing section 1212, the RF section 122, and the measurement section 123.

The transmitting/receiving antenna 130 can include an antenna, which is described on the basis of common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmitting/receiving antenna 130.

Meanwhile, the transmitting/receiving section 120 (RF section 122) may perform amplification, filtering processing, demodulation to a baseband signal, and the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmitting/receiving antenna 130, and the transmission line interface 140.

The transmission/reception section 120 may transmit the downlink control information requesting transmission of channel state information using the uplink control channel.

When the transmission of the uplink control channel used for the transmission of the channel state information overlaps with another UL transmission, the control section 110 may perform control to receive at least one of the channel state information and another UL transmission based on the first priority corresponding to the channel state information and the second priority corresponding to another UL transmission.

### (User Terminal)

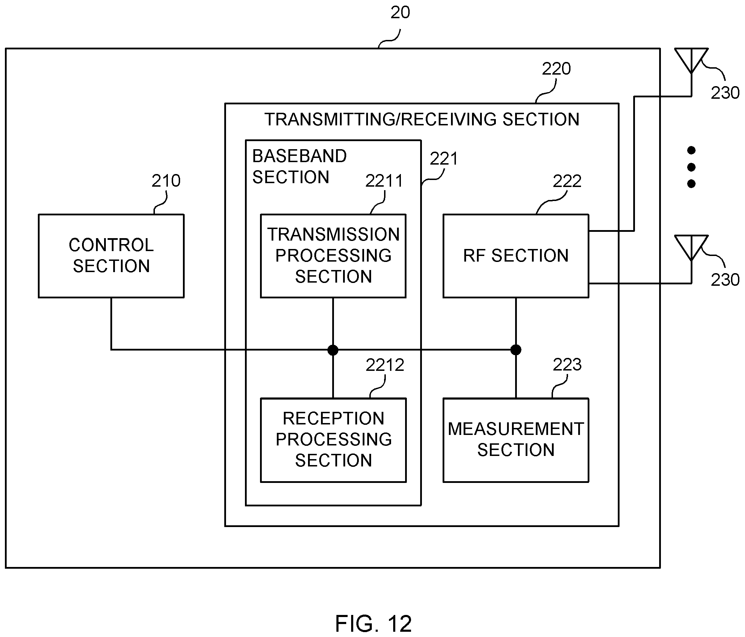

Fig. 12 is a diagram illustrating an example of a configuration of the user terminal according to one embodiment. The user terminal 20 includes a control section 210, a transmission/reception section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described on the basis of common recognition in the technical field related to the present disclosure.

The control section 210 may control signal generation, mapping, and the like. The control section 210 may control transmission/reception, measurement, and the like using the transmission/reception section 220 and the transmission/reception antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described on the basis of common recognition in the technical field related to the present disclosure.

The transmitting/receiving section 220 may be configured as an integrated transmitting/receiving section, or may include a transmitting section and a receiving section. The transmission section may include the transmission processing section 2211 and the RF section 222. The receiving section may include the reception processing section 2212, the RF section 222, and the measurement section 223.

The transmission/reception antenna 230 can include an antenna, which is described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined on the basis of configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmission/reception section 220 and the transmission/reception antenna 230.

The transmission/reception section 220 may receive the downlink control information requesting the transmission of the channel state information using the uplink control channel.

When the transmission of the uplink control channel used for the transmission of the channel state information overlaps with another UL transmission, the control section 210 may perform control to transmit at least one of the channel state information and another UL transmission based on the first priority corresponding to the channel state information and the second priority corresponding to another UL transmission.

The first priority may be configured for each trigger state corresponding to the channel state information or for each report configuration corresponding to the channel state information.

The control section 210 may determine the first priority by a different method according to whether the downlink control information schedules data.

When the first priority and the second priority are the same, the control section 210 may perform control to transmit both the channel state information and the other UL transmission.

### (Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like. For example, a functional block (component) that has a transmission function may be referred to as a transmission section (transmitting unit), a transmitter, and the like. In any case, as described above, the implementation method is not particularly limited.

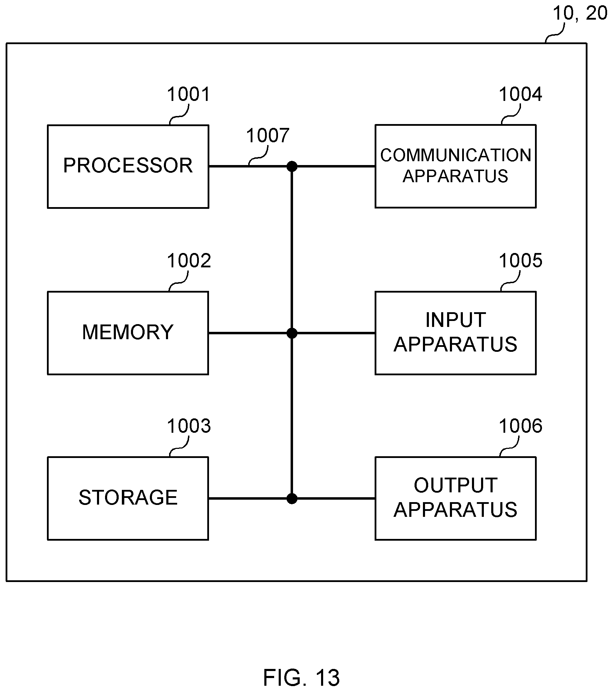

For example, the base station, the user terminal, and the like according to one embodiment of the present disclosure may function as a computer that executes the processing of the radio communication method of the present disclosure. Fig. 13 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, and a unit can be read as interchangeable with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) onto hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmission/reception section 120 (220), and the like may be implemented by the processor 1001.

Furthermore, the processor 1001 reads programs (program codes), software modules, data, and the like from at least one of the storage 1003 and the communication apparatus 1004 into the memory 1002, and executes various processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmission/reception device) for performing inter-computer communication via at least one of a wired network and a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmission/reception section 120 (220), the transmission/reception antenna 130 (230), and the like described above may be implemented by the communication apparatus 1004. The transmission/reception section 120 (220) may be implemented by physically or logically separating the transmission section 120a (220a) and the reception section 120b (220b) from each other.

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, apparatuses, including the processor 1001, the memory 1002, and the like are connected by the bus 1007 so as to communicate information. The bus 1007 may be formed with a single bus, or may be formed with buses that vary between apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be read as interchangeable with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be read as interchangeable with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot", and the like, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit such as a channel-coded data packet (transport block), a code block, a codeword, or the like, or may be a processing unit such as scheduling or link adaptation. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, and the like) may be read as interchangeable with a TTI having a time duration exceeding 1 ms, and a short TTI (for example, a shortened TTI) may be read as interchangeable with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

In addition, the RB may include one or more symbols in the time domain, and may be one slot, one mini slot, one subframe or one TTI in length. One TTI, one subframe, and the like may each include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. A PRB may be defined in a given BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that, a "cell", a "carrier", and the like in the present disclosure may be read as interchangeable with a BWP.

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be instructed by a given index.

Names used for, for example, parameters in the present disclosure are in no respect limitative. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and the like may be input and output via a plurality of network nodes.

The information, signals and the like that are input and/or output may be stored in a specific location (for example, in a memory), or may be managed using a management table. The information, signals, and the like to be input and output can be overwritten, updated, or appended. The output information, signals, and the like may be deleted. The information, signals and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, by reporting another piece of information, and the like).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and the like.

Moreover, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and mobile station may be called as a transmission apparatus, a reception apparatus, a wireless communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station or the mobile station may be an Internet of Things (IoT) device such as a sensor.

Further, the base station in the present disclosure may be read as interchangeable with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be read as interchangeable with terms corresponding to communication between terminals (for example, "side"). For example, an uplink channel and a downlink channel may be read as interchangeable with a side channel.

Likewise, the user terminal in the present disclosure may be read as interchangeable with the base station. In this case, the base station 10 may be configured to have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, although various methods have been illustrated in the present disclosure with various components of steps using exemplary orders, the specific orders that are illustrated herein are by no means limiting.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and the like as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and the like.

In addition, to "judge" and "determine" as used herein may be interpreted to mean making judgements and determinations related to resolving, selecting, choosing, establishing, comparing, and the like. In other words, to "judge" and "determine" as used herein may be interpreted to mean making judgements and determinations related to some operations.

In addition, "judge" and "determine" as used herein may be read as interchangeable with "assuming", "expecting", "considering", or the like.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other". Note that the phrase may mean that "A and B are different from C". The terms such as "separated", "coupled", and the like may be similarly interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a reception section configured to receive downlink control information requesting transmission of channel state information using an uplink control channel; and
a control section configured to perform control to transmit at least one of the channel state information and another UL transmission based on a first priority corresponding to the channel state information and a second priority corresponding to the another UL transmission when transmission of the uplink control channel used for transmission of the channel state information overlaps with the another UL transmission.

2. The terminal according to claim 1, wherein the first priority is configured for each trigger state corresponding to the channel state information or for each report configuration corresponding to the channel state information.

3. The terminal according to claim 1, wherein the control section determines the first priority by a different method according to whether the downlink control information schedules data.

4. The terminal according to claim 1, wherein the control section performs control to transmit both the channel state information and the another UL transmission when the first priority and the second priority are the same.

5. A radio communication method of a terminal comprising:
receiving downlink control information requesting transmission of channel state information using an uplink control channel; and
performing control to transmit at least one of the channel state information and another UL transmission based on a first priority corresponding to the channel state information and a second priority corresponding to the another UL transmission when transmission of the uplink control channel used for transmission of the channel state information overlaps with the another UL transmission.

6. A base station comprising:
a transmission section configured to transmit downlink control information requesting transmission of channel state information using an uplink control channel; and
a control section configured to perform control to receive at least one of the channel state information and another UL transmission based on a first priority corresponding to the channel state information and a second priority corresponding to the another UL transmission when transmission of the uplink control channel used for transmission of the channel state information overlaps with the another UL transmission.
